# EUROPEAN PATENT SPECIFICATION

(11) **EP 3 442 917 B1**
(45) Date of publication and mention of the grant of the patent: **26.02.2020**
(21) Application number: 17717697.1
(22) Date of filing: 13.04.2017
(51) Int. Cl.: C03C 17/30, C09D 171/00, C09D 183/00, C03C 17/00, C03C 17/34

(54) **COATING WITH THERMAL STABILITY AND ANTI-SCRATCH PROPERTIES, GLASS PRODUCT HAVING SUCH COATING, VARNISH PRODUCT FOR PRODUCING SUCH COATING AND METHOD FOR PROTECTING A GLASS SURFACE AND IN PARTICULAR A PHARMACEUTICAL PRIMARY GLASS CONTAINER**
BESCHICHTUNG MIT THERMISCHER STABILITÄT UND KRATZFESTEN EIGENSCHAFTEN, GLASPRODUKT MIT SOLCH EINER BESCHICHTUNG, LACKPRODUKT ZUR HERSTELLUNG SOLCH EINER BESCHICHTUNG UND VERFAHREN ZUM SCHÜTZEN EINER GLASOBERFLÄCHE UND INSBESONDERE EINES PHARMAZEUTISCHEN PRIMÄRGLASBEHÄLTERS
REVÊTEMENT À STABILITÉ THERMIQUE ET PROPRIÉTÉS ANTI-RAYURES, PRODUIT EN VERRE AYANT UN TEL REVÊTEMENT, PRODUIT DE VERNIS POUR PRODUIRE UN TEL REVÊTEMENT ET PROCÉDÉ POUR PROTÉGER UNE SURFACE EN VERRE ET EN PARTICULIER UN RÉCIPIENT EN VERRE PRIMAIRE PHARMACEUTIQUE

(30) Priority: 14.04.2016 IT UA20162597
(43) Date of publication of application: 20.02.2019
(73) Proprietor: Nuova Ompi S.r.l., 35017 Piombino Dese (PD) (IT); Rescoll Sarl, 33615 Pessac cedex (FR)
(72) Inventor: GRANGER, Jeanne-Marie, 33160 Saint-Médard-ed-Jalles (FR); NAPOLITAN, Mathilde, 33400 Talence (FR); DELIANE, Florent, 33300 Bordeaux (FR); BUREAU, Christophe, 38030 Grenoble Cedex 2 (FR)
(74) Representative: Mitola, Marco
(86) International application number: PCT/EP2017/058921
(87) International publication number: WO 2017/178584

(56) References cited:
- EP-A1- 1 632 540
- DE-A1- 10 004 132

## Description

**The** present invention relates to a transparent protective coating with thermal stability and anti-scratch properties. Such coating is made for a glass product and in particular a pharmaceutical primary glass container.

During manufacturing and their use in the filling lines of pharmaceutical companies, primary glass containers (such as bottles, cartridges, syringes, vials for pharmaceutical applications) suffer a series of impacts and contact that can create defects on their surface. Such defects may be the source of micro-cracks and be at the origin of fractures in glass containers, anywhere from the production lines to the filling lines, right up to the hands of the patient.

The same is valid for any glass surface: defects are at the origin of fractures in glasses: this constitutes an active field of improvement of products in the screens of smartphones and tablets, but also naturally for any type of flat glass surface exposed to real conditions such as windscreens, windows, etc.

Many solutions proposed up to now consist of inventing new glass materials, intrinsically more resistant to mechanical limitations. This can happen by changing the nature of the minerals that are part of the composition of the molten mass when the glass is produced or by making a posteriori changes through ion exchange - by immersing the glass in a bath of molten ion liquid to force the exchange of sodium ions through ions with a higher valency such as aluminium. In both cases, the motivation is comparable: an attempt is made to increase the bulk modulus of all or part of the glass object by increasing the electrostatic interactions between the glass components and therefore "contracting" the 3D structure of the material and making it less susceptible to breaks originating from or mediated by the propagation of a crack.

A significant drawback of such approach is that it intrinsically changes the nature of the glass and often many of its collateral properties. In most applications (and in particular in the pharmaceutical sector), the recharacterization and/or legislative validation must be performed ex-novo when such changes do not simply prevent the use of the object constituted by these new glass materials, for example due to unacceptable levels of extractables or substances that can be released when the glass comes into contact with a pharmaceutical formulation.

Attempts have been made on various occasions to solve the issue of glass breaking due to surface scratches through organic or mineral coatings, but the solutions are often reciprocally exclusive of some types of limitations. The organic layers may offer good results and may be easy to process but are not suitable if the object is subjected to a high thermal balance, while the inorganic layers may be suitable for high temperature changes but are obtained through deposition processes that imply a series of limitations, therefore not compatible with all situations and in particular with the industrial scale.

Since surface scratches on glass are precursors to fractures which ultimately propagate into the mass of the material and cause macroscopic breakage, up to now the solutions to such problem consisted of limiting such scratches or limiting their capacity to act as precursors to features. DE 10004132 discloses a coating comprising at least one organic part conferring lubricant and anti scratch properties and at least an inorganic part conferring thermal stability, characterized in that said inorganic part comprises titanium butoxide and said organic part comprises silane.EP-1632540 discloses the use of fluorosilane in coatings.

A first solution consists of implementing the "Non Glass To Glass Contact" (NGTGC) process, by which it is possible to limit or even eliminate the presence of scratches on the surface of primary glass containers such as cartridges or bottles: the resulting contraction force, necessary for breaking the container making it collapse, is therefore 3 to 4 times higher than the contraction force for a similar container that has not be subjected to an NGTGC production process. The main disadvantage of this approach is that when the glass objects produced through NGTGC suffer a single contact - either in the factory of the glass manufacturer or in the factory of the pharmaceutical company - with an object able to scratch the surface of the glass (other glass surface, metal surface etc.), their contraction force is suddenly reduced to a value comparable to that of an object produced without NGTGC and all the advantages of NGTGC are lost because of this single contact.

A second solution consists of increasing the surface energy of the glass in its surface and subsurface by varying its formulation, at least on a given thickness below the surface, for example by introducing aluminium ions in the place of sodium cations. This process is called ion exchange and it is performed by immersing the glass in a molten salt bath at about 300-350 °C for a number of hours. Such process is heavy from an industrial point of view, intrinsically performed in series and requires installations of an impressive size to be economically feasible. Regardless of the nature of the glass used in the underlying part, the ion exchange process changes the chemical composition of the same surface which will be in contact with the formulation that it is to contain: this can change the container/content interaction and require validation of the most significant changes, which often dissuades pharmaceutical companies.

Attempts have been made on various occasions to solve the question of glass breaking due to surface scratches through coatings such as, for example, in US2013/0171456 Al, which describes a low-friction coating connected to a glass surface and comprising a polymeric chemical formulation. In the aforementioned document, the inventors observe that when such low friction coefficient is applied to the surface of glass pharmaceutical containers such as bottles, the surface of said bottles is slightly damaged following the scratching of one bottle with respect to another. No scientific explanation for such observation is provided, but an article published in 1989 (H.H. Chen, "Scratch resistant low-friction/low surface energy coating for silicon substrate", Applied Polymer Science, 37(2), 349-364) provides an example of an ultra thin "soft" layer on a silicone surface that displays higher anti-scratch properties and concludes that they are due to the absence of deformation and tear components and components with reduced adhesion in the slide resistance mechanism.

Such soft coatings provide good results as long as they are totally uniform and remain unaltered during the processes. Friction with surfaces having for example higher roughness than the thickness of the layer may cause a scratch on the underlying surface, since the coating material is usually also very soft (a polymer in the two cases above). The same could occur when the surface is hit by a pointed portion that is longer than the thickness of the coating in at least one of its dimensions. It is well known that the lubricating and anti-scratch coating is performed well through organic species such as polytetrafluoroethylene or inorganic species such as silicone. Hybrid organic/inorganic organosilane such as (3-glycidyloxypropyl)trimethoxysilane or 3-methacryloxypropyltrimethoxysilane are used for that purpose. Lubrication based on organic species is due to the flexibility of the organic portion and the incapacity of some atoms (e.g. fluorine) to interact with other molecules. Despite this, such molecules are not very resistant to temperatures up to 250 °C. In order to combine good lubricating properties with thermal stability, polyimide was used. Due to its specific structure, polyimide is thermally stable and offers good resistance to scratches and to abrasion. The main drawback with such polymer is that the implied solvent is methanol, which is restrictive for preventing risks during the production of the solution and the coating process.

The task of the present invention is to design a new and inventive solution with respect to the prior art which gives the glass product a transparent surface coating with anti-scratch properties, resistance to mechanical damage and thermal stability.

Within the scope of such technical task, an object of the present invention is to provide a glass product with anti-scratch, sliding, transparent and compatibility properties with significant thermal exposure, hence increasing its compressive strength, minimizing the quantity of defects on its surface which can act as precursors to fractures.

There is also the need for a method through which the improvement in anti-scratch properties of the surface of a glass container can translate into greater overall resistance to breaking of the same glass composition.

Last but not least, an object of the present invention is to provide a coating with anti-scratch properties, resistance to mechanical damage and thermal stability within the context of an eco-compatible production process.

The technical task and such objects according to the present invention are reached by providing a coating comprising at least an organic portion conferring lubricating and anti-scratch properties and at least an inorganic portion conferring thermal stability, characterized in that said inorganic portion comprises titanium butoxide and said organic portion comprises fluorosilane.

Preferably, said fluorosilane is a perfluoro-polyether fluorosilane.

In an embodiment of the invention, said coating comprises a first layer containing said organic portion and a second layer containing said inorganic portion.

In a different embodiment of the invention, said coating comprises a single layer containing said organic portion and said inorganic portion.

In one embodiment of the invention said coating has a thickness of less than 50 nm.

The present invention also describes a glass product that implements such coating, a pharmaceutical primary glass container that implements such coating and a varnish deriving from a sol - gel varnish synthesis for producing such coating.

As mentioned, the coating derives from a sol - gel varnish synthesis. Such process allows the coating properties to be modulated by selecting the appropriate precursors, synthesis conditions and coating process.

Advantageously, according to the present invention, an inorganic network of metal oxides is created to confer resistance to high temperatures and, in order to improve the resistance to scratches and abrasion, the non-polymeric organic portion is combined with the inorganic network. Such hybrid organic-inorganic materials are based on fluoro-compounds.

The present invention also provides a method for protecting a glass surface characterized in that it comprises a step of coating said glass surface with such varnish.

According to a preferred embodiment of the invention said method of protecting a glass surface comprises an activation step through a low pressure plasma treatment or atmospheric plasma treatment of the glass surface prior to the application of such varnish coating to confer wettability and adherence of the varnish product.

According to a preferred embodiment of the invention the low pressure plasma treatment is performed with a mixture of N₂/H₂ gas and the atmospheric plasma treatment is performed with air. After the synthesis of the varnish, the coating will be performed through spray coating or immersion coating with a specific machine.

The coating applied in this way is then hardened.

In a preferred embodiment of the present invention, pharmaceutical primary glass containers produced through an NGTGC process are subsequently coated with an anti-scratch coating in compliance with the present invention. The resulting pharmaceutical primary glass containers demonstrate greater long-lasting break strength than primary containers that are not treated with the coating according to the invention. It is therefore considered that this is due to the fact that the NGTGC process confers greater break strength and the coating according to the present invention prevents scratches occurring, hence "freezing" the advantages of the NGTGC process in that way also when the primary containers are further packaged and used in a standard filling line, in which they are exposed to contact between containers, but also contact with metal parts.

The coating made according to the present invention shows thermal resistance up to 330°C.

Advantageously, the coating made according to the present invention is ecological, which means that the compounds used in the design of the formulation comply with REACH and do not present safety risks.

Naturally, a coating according to the present invention may be used for making glass containers for pharmaceutical applications such as bottles, cartridges, syringes or vials for preventing mechanical damage or breaking, but may also be used in other fields of application such as glass packaging for food and drink and products for personal hygiene, windows, screens, optical components, lighting, glasses and watches. Furthermore, the present invention may be applied on other substrates such as plastics, fabrics, ceramics, metals and alloys in which anti-fingerprint tribological properties and /or high thermal properties are to be obtained.

According to an embodiment of the invention, in this method of protecting substrates such as plastics, textiles, ceramics, metals and alloys, said first varnish product is applied as primer and said second varnish is applied as top coat.

According to an embodiment of the invention, a glass packaging for food, beverage and personal care products, glazing, displays, optical components, lighting, eyewear, and watchmaking is characterized in that of embodying an above referred coating.

Specific embodiments of the production process of the coating and the application thereof according to the present invention are described below.

The following configurations have been used in order to combine thermal properties and mechanical properties.

### Configuration A

Such configuration consists of a multi-layer coating:
- a primer layer of titanium butoxide, metal mesh for improving adherence and thermal stability
- a finishing layer of fluorosilane network for improving the mechanical properties such as lubrication or scratch resistance.

### Configuration A - Synthesis of the varnish

### Synthesis of the first one-component varnish product

An inorganic solution was used. It comprises precursors of titanium alcoxides.

The weight percentages of different elements of the general formulation are listed below:

| | |
|---|---|
| Titanium butoxide | 1-10% |
| H2O | 20-50% |
| Ethanol | 30-60% |
| Acetic acid | 1-15% |

Titanium butoxide and acetic acid are mixed and agitated for a hour.

Ethanol and water are subsequently added to the solution. The solution is agitated for 24 hours. The solution is ready for use.

Such solution has a pH between 2 and 3, a viscosity between 3 and 4 cP, a dry matter content between 1 and 2% and a particle diameter between 20 and 35 nm.

### Synthesis of the second two-component varnish product

In order to guarantee lubricating properties, fluorosilane was used, an organosilane containing fluorine atoms. Before being used, the fluorosilane must be hydrolyzed.

The weight percentages of different elements of the general formulation are listed below:

| | |
|---|---|
| Fluorosilane | 1-15% |
| H2O | 1-6% |
| HCl (0.1N) | 0.1-5% |
| Ethanol | 80-96% |

The varnish activator component is formed by mixing ethanol, water and HC1 (0.1 N).

The precursor component of the varnish is added to the activator component and all the components are mixed together and shaken for an hour prior to use.

Such solution has a pH between 2 and 3, a viscosity between 3 and 4 cP and a dry matter content between 1 and 2%.

For such configuration, the first and second varnish products are used separately for making the multi-layer coating.

A specific formulation of the varnish and its characteristics for the first and second varnish product are listed below.

| | | 1^{st} varnish product | 2^{nd} varnish product |
|---|---|---|---|
| Hydrochloric acid | Activator | - | 1% |
| Ethanol | Solvent | 44% | 94% |
| Titanium(IV) n-Butoxide | Precursor | 5% | - |
| Glacial acetic acid (99%) | Activator | 11% | - |
| Distilled water | Activator / Solvent | 40% | 4% |
| Fluorolink FS10™ | Precursor | - | 1% |

### 100g synthesis of specific-formulation varnish.

### Synthesis of the first varnish product.

Add 11 g of acetic acid to a beaker.

Under strong magnetic agitation (450-500 rpm), add the titanium precursor drop by drop (5 g). Leave under agitation for 1 h (450 - 500 rpm).

Add ethanol (44 g) then water (40 g) with a flow rate of 600mL/min, maintain agitation (450-500 rpm).

Leave the solution under agitation for 24 h (250-300 rpm) .

### Synthesis of the second varnish product.

Add 94 g of ethanol in a beaker, add 4 g of distilled water and 1 g of hydrochloric acid.

Leave the solution for 1 min to homogenize (250-300 rpm) .

Add 1 g of Fluorolink FS10™ and leave under agitation for 1 hour (250 - 300 rpm).

The first varnish product is coated as a primer layer through spraying onto the glass substrate, subsequently, the second varnish product is coated as a finishing layer. Thermal hardening is then performed at 150°C for 15 min.

### Properties of the specific varnish formulation (liquid phase)

| | 1^{st} varnish product | 2^{nd} varnish product |
|---|---|---|
| Density | 0.924 | 0.806 |
| Dry matter content | 0.39% | 0.38% |
| Viscosity | 3.8 cP | 1.5-1.7 cP |
| Colour / appareance | Transparent / slightly turbid | Turbid |
| Surface tension (mN/m) | 26.8 | 18.7 |
| Ph | 2.9 | 2.4 |
| Particle size | 20 - 30 nm | n.a. |

### Configuration B

Such configuration consists of a single-layer coating.

The varnish product contains:
mixture of titanium butoxide and fluorosilane network.

### Configuration B - Synthesis of the varnish

The weight percentages of different elements of such varnish formulation are listed below:

| | |
|---|---|
| Titanium butoxide | 2-10% |
| Acetic acid | 5-20% |
| Ethanol | 30-60% |
| Water | 30-50% |
| Fluorosilane | 0.1-1% |

The titanium butoxide is hydrolyzed as described in the synthesis of Ti0₂ (configuration A). At the end of the hydrolysis of titanium butoxide, fluorosilane (i.e. Fluorolink FS10™) is added to the solution without any pretreatment.

### Coating process

The process described below refers to pharmaceutical primary glass containers only by way of example, since the application may, as mentioned, also include other types of substrates.

### Cleaning / degreasing

For glass bottles, the pretreatment process is the same for every configuration.

Before being coated, each bottle is degreased with fabric and ethanol. Subsequently, the bottles are treated by atmospheric plasma with air for 30s. In a different embodiment, a low pressure plasma treatment with a mixture of N₂/H₂ gas may be performed.

The bottles are coated following this treatment.

### Coating

The coating process depends on the formulation and on the configuration.

Configuration A consists, as mentioned, of a double-layer coating. The layer of primer comprising Ti0₂ is performed through spraying (4s at 50 psi with a rotation speed of 480 rpm), then the bottle is kept in rotation at 400 rpm for 10s and the finishing layer containing fluorosilane is performed through spray coating for 4s at 480 rpm with a pressure of 50 psi.

In configuration B based on the formulation of Ti0₂ and fluorosilane the coating process is performed through spray coating for 4s, at a rotation of 480 rpm and a pressure at the nozzle of 50 psi.

### Hardening

After the deposition process, the coating is hardened at 150°C for 15 min.

It is to be understood that changes and variations that are not beyond the scope of the invention as defined in the appended claims may be made to the coating and to the related production method described and illustrated herein.

## Claims

1. A coating comprising at least an organic portion conferring lubricating and anti-scratch properties and at least an inorganic portion conferring thermal stability, **characterized in that** said inorganic portion comprises titanium butoxide and said organic portion comprises fluorosilane.

2. The coating according to claim 1, **characterized in that** said fluorosilane is a perfluoro-polyether fluorosilane.

3. The coating according to claim 1, **characterized in that** it comprises a first layer containing said organic portion and a second layer containing said inorganic portion.

4. The coating according to claim 1, **characterized in that** it comprises a single layer containing said organic portion and said inorganic portion.

5. A glass product **characterized in that** it comprises a coating according to any one of claims 1 to 4.

6. A pharmaceutical primary glass container **characterized in that** it comprises a coating according to any one of claims 1 to 4.

7. The pharmaceutical primary glass container according to claim 6, **characterized in that** said coating has a thickness of less than 50 nm.

8. A varnish product for making a coating, **characterized in that** it comprises titanium butoxide, fluorosilane and at least a solvent.

9. The varnish product for making a coating, **characterized in that** it comprises: a first varnish product comprising titanium butoxide and at least a solvent; and a second varnish product comprising fluorosilane and at least a solvent.

10. The varnish product for making a coating according to claim 8 or 9, **characterized in that** said at least a solvent is ethanol and/or acetic acid in combination with water.

11. The varnish product for making a coating according to any one of claims 8 to 10, **characterized in that** it derives from a sol - gel varnish synthesis.

12. The varnish product for making a coating according to claim 9, **characterized in that** said first varnish product is a one-component varnish product with the following formulation: titanium butoxide in a range from 1 to 10% by weight, acetic acid in a range from 1 to 15% by weight, ethanol in a range from 30 to 60% by weight and water in a range from 20 to 50% by weight; and **in that** said second varnish product comprises an activator component and a precursor component, said activator component comprising HCl (0.1 N) in a range from 0.1 to 5% by weight, ethanol in a range from 80 to 96% by weight and water in a range from 1 to 6% by weight, and said precursor component comprising fluorosilane in a range from 1 to 15% by weight.

13. A method for protecting the glass surface of a glass product, **characterized in that** it comprises a step of applying a varnish product according to any one of claims 8 to 12.

14. The method for protecting the glass surface according to claim 13, **characterized in that** said first varnish product is applied as primer and said second varnish product is applied as finishing layer.

15. The method for protecting the glass surface according to claim 13, **characterized in that** said glass product is a pharmaceutical primary glass container produced through a NGTGC process.

16. A method of protecting substrates such as plastics, textiles, ceramics, metals and alloys **characterized in that** it comprises a step of applying a varnish product according to any one of claims 8 to 12.

17. The method of protecting substrates according to claim 16 **characterized in that** said first varnish product is applied as primer and said second varnish is applied as top coat.

18. Glass packaging for food, beverage and personal care products, glazing, displays, optical components, lighting, eyewear, and watchmaking **characterized in that** of embodying a coating according to any claim 1 to 4.

## Patentansprüche

1. Beschichtung, umfassend mindestens einen organischen Anteil, der Schmiereigenschaften und Kratzfestigkeitseigenschaften bereitstellt und mindestens einen anorganischen Anteil, der thermische Stabilität bereitstellt, **dadurch gekennzeichnet, dass** der anorganische Anteil Titantetrabutanolat umfaßt und der organische Anteil Fluorsilan umfaßt.

2. Beschichtung nach Anspruch 1, **dadurch gekennzeichnet, dass** das Fluorsilan ein Perfluorpolyetherfluorsilan ist.

3. Beschichtung nach Anspruch 1, **dadurch gekennzeichnet, dass** sie eine erste Schicht, die den organischen Anteil enthält, und eine zweite Schicht, die den anorganischen Anteil enthält, umfaßt.

4. Beschichtung nach Anspruch 1, **dadurch gekennzeichnet, dass** sie eine Einzelschicht umfaßt, welche den organischen Anteil und den anorganischen Anteil enthält.

5. Glasprodukt, **dadurch gekennzeichnet, dass** es eine Beschichtung nach einem der Ansprüche 1 bis 4 umfaßt.

6. Pharmazeutische Primärglasbehälter, **dadurch gekennzeichnet, dass** er eine Beschichtung nach einem der Ansprüche 1 bis 4 umfaßt.

7. Pharmazeutischer Primärglasbehälter nach Anspruch 6, **dadurch gekennzeichnet, dass** die Beschichtung eine Dicke von weniger als 50 nm aufweist.

8. Lackprodukt zur Herstellung einer Beschichtung, **dadurch gekennzeichnet, dass** es Titantetrabutanolat, Fluorsilan und mindestens ein Lösungsmittel umfaßt.

9. Lackprodukt zur Herstellung einer Beschichtung, **dadurch gekennzeichnet, dass** es umfaßt: Ein erstes Lackprodukt, umfassend Titantetrabutanolat und mindestens ein Lösungsmittel, und ein zweites Lackprodukt, umfassend Fluorsilan und mindestens ein Lösungsmittel.

10. Lackprodukt zur Herstellung einer Beschichtung nach Anspruch 8 oder 9, **dadurch gekennzeichnet, dass** das mindestens eine Lösungsmittel Ethanol und/oder Essigsäure in Kombination mit Wasser ist.

11. Lackprodukt zur Herstellung einer Beschichtung nach einem der Ansprüche 8 bis 10, **dadurch gekennzeichnet, dass** es sich aus einer Sol-Gel-Lacksynthese ableitet.

12. Lackprodukt zur Herstellung einer Beschichtung nach Anspruch 9, **dadurch gekennzeichnet, dass** das erste Lackprodukt ein Einkomponentenlackprodukt mit der folgenden Zusammensetzung ist: Titantetrabutanolat in einem Bereich von 1 bis 10 Gew.-%, Essigsäure in einem Bereich von 1 bis 15 Gew.-%, Ethanol in einem Bereich von 30 bis 60 Gew.-% und Wasser in einem Bereich von 20 bis 50 Gew.-%, und dadurch, dass das zweite Lackprodukt eine Aktivierungskomponente und eine Vorläuferkomponente umfaßt, wobei die Aktivierungskomponente HCl (0,1 N) in einem Bereich von 0,1 bis 5 Gew.-%, Ethanol in einem Bereich von 80 bis 96 Gew.-% und Wasser in einem Bereich von 1 bis 6 Gew.-% umfaßt und die Vorläuferkomponente Fluorsilan in einem Bereich von 1 bis 15 Gew.-% umfaßt.

13. Verfahren zum Schützen der Glasoberfläche eines Glasprodukts, **dadurch gekennzeichnet, dass** es einen Schritt des Aufbringens eines Lackprodukts nach einem der Ansprüche 8 bis 12 umfaßt.

14. Verfahren zum Schützen der Glasoberfläche nach Anspruch 13, **dadurch gekennzeichnet, dass** das erste Lackprodukt als Grundierung aufgetragen wird und das zweite Lackprodukt als Abschlußschicht aufgetragen wird.

15. Verfahren zum Schützen der Glasoberfläche nach Anspruch 13, **dadurch gekennzeichnet, dass** das Glasprodukt ein pharmazeutischer Primärglasbehälter ist, der durch ein NGTGC-Verfahren hergestellt ist.

16. Verfahren zum Schützen von Substraten wie Kunststoffen, Textilien, Keramiken, Metallen und Legierungen, **dadurch gekennzeichnet, dass** es einen Schritt des Aufbringens eines Lackprodukts nach einem der Ansprüche 8 bis 12 umfaßt.

17. Verfahren zum Schützen von Substraten nach Anspruch 16, **dadurch gekennzeichnet, dass** das erste Lackprodukt als Grundierung aufgetragen wird und das zweite Lackprodukt als Deckbeschichtung aufgetragen wird.

18. Glasverpackung für Lebensmittel, Getränke und Körperpflegeprodukte, Verglasungen, Anzeigevorrichtungen, optische Komponenten, Beleuchtung, Brillen und Uhrenherstellung, **dadurch gekennzeichnet, dass** es eine Beschichtung nach einem der Ansprüche 1 bis 4 verkörpert.

## Revendications

1. Revêtement comprenant au moins une portion organique conférant des propriétés lubrifiantes et anti-rayures et au moins une portion inorganique conférant une stabilité thermique, **caractérisé en ce que** ladite portion inorganique comprend du butoxyde de titane et ladite portion organique comprend du fluorosilane.

2. Revêtement selon la revendication 1, **caractérisé en ce que** ledit fluorosilane est un perfluoro-polyéther fluorosilane.

3. Revêtement selon la revendication 1, **caractérisé en ce qu'**il comprend une première couche contenant ladite portion organique et une seconde couche contenant ladite portion inorganique.

4. Revêtement selon la revendication 1, **caractérisé en ce qu'**il comprend une couche unique contenant ladite portion organique et ladite portion inorganique.

5. Produit de verre **caractérisé en ce qu'**il comprend un revêtement selon l'une quelconque des revendications 1 à 4.

6. Contenant primaire pharmaceutique en verre **caractérisé en ce qu'**il comprend un revêtement selon l'une quelconque des revendications 1 à 4.

7. Contenant primaire pharmaceutique en verre selon la revendication 6, **caractérisé en ce que** ledit revêtement a une épaisseur de moins de 50 nm.

8. Produit de vernis pour réaliser un revêtement, **caractérisé en ce qu'**il comprend du butoxyde de titane, du fluorosilane et au moins un solvant.

9. Produit de vernis pour réaliser un revêtement, **caractérisé en ce qu'**il comprend : un premier produit de vernis comprenant du butoxyde de titane et au moins un solvant ; et un second produit de vernis comprenant du fluorosilane et au moins un solvant.

10. Produit de vernis pour réaliser un revêtement selon la revendication 8 ou 9, **caractérisé en ce que** ledit au moins un solvant est de l'éthanol et/ou de l'acide acétique en combinaison avec de l'eau.

11. Produit de vernis pour réaliser un revêtement selon l'une quelconque des revendications 8 à 10, **caractérisé en ce qu'**il dérive d'une synthèse de vernis par sol-gel.

12. Produit de vernis pour réaliser un revêtement selon la revendication 9, **caractérisé en ce que** ledit premier produit de vernis est un produit de vernis monocomposant de formulation suivante : butoxyde de titane dans une plage de 1 à 10 % en poids, acide acétique dans une plage de 1 à 15 % en poids, éthanol dans une plage de 30 à 60 % en poids et eau dans une plage de 20 à 50 % en poids ; et **en ce que** ledit second produit de vernis comprend un composant activateur et un composant précurseur, ledit composant activateur comprenant HCl (0,1 N) dans une plage de 0,1 à 5 % en poids, éthanol dans une plage de 80 à 96 % en poids et eau dans une plage de 1 à 6 % en poids, et ledit composant précurseur comprenant du fluorosilane dans une plage de 1 à 15 % en poids.

13. Procédé de protection de la surface de verre d'un produit de verre, **caractérisé en ce qu'**il comprend une étape d'application d'un produit de vernis selon l'une quelconque des revendications 8 à 12.

14. Procédé de protection de la surface de verre selon la revendication 13, **caractérisé en ce que** ledit premier produit de vernis est appliqué en tant qu'apprêt et ledit second produit de vernis est appliqué en tant que couche de finition.

15. Procédé de protection de la surface de verre selon la revendication 13, **caractérisé en ce que** ledit produit de verre est un contenant primaire pharmaceutique en verre produit par un processus NGTGC.

16. Procédé de protection de substrats tels que des plastiques, des textiles, des céramiques, des métaux et des alliages, **caractérisé en ce qu'**il comprend une étape d'application d'un produit de vernis selon l'une quelconque des revendications 8 à 12.

17. Procédé de protection de substrats selon la revendication 16, **caractérisé en ce que** ledit premier produit de vernis est appliqué en tant qu'apprêt et ledit second vernis est appliqué en tant que couche supérieure.

18. Emballage de verre pour produits alimentaires, de boisson et de soins personnels, glaçage, présentoirs, composants optiques, éclairage, articles de lunetterie et horlogerie, **caractérisé en ce qu'**il intègre un revêtement selon l'une quelconque des revendications 1 à 4.
